# EUROPEAN PATENT APPLICATION

(11) **EP 2 785 078 A1**
(43) Date of publication of application: **01.10.2014**
(21) Application number: 13161335.8
(22) Date of filing: 27.03.2013
(51) Int. Cl.: H04W 4/02

(54) **Method for attendance registration**

(71) Applicant: Easy Correct APS, 5250 Odense SV (DK)
(72) Inventor: Sigrist, Daniel, 6000 Kolding (DK)
(74) Representative: Schmidt, Jens Joergen

(57) **Abstract**

A method of registering attendance is disclosed comprising the steps of, for each of a plurality of mobile devices,
performing wireless communication between said mobile device and at least one wireless network connection device, and in relation to said wireless communication providing output data comprising information identifying the at least one wireless network connection device and identification data for the mobile device,
obtaining said output data relating to said plurality of mobile devices, and
correlating said output data with a database comprising for each of the plurality of mobile devices associated data relating to at least periods of time, scheduled attendance and mobile device identification data so as to obtain confirmation of attendance or non-attendance for each of the plurality of mobile devices and thus the student associated with the mobile device.

## Description

The present invention relates to a method of registering attendance of students/pupils and checking this with scheduled attendance as well as computer programme products for performing such methods of registration.

### BACKGROUND

Attendance registration is in use in a vast number of teaching institutions, where the criterion for passing includes a minimum of attendance by the students to the scheduled classes. Moreover, many schools are required to keep track of the attendance of pupils/students. The traditional method of attendance registration is purely manual, i.e. the teacher marking the attendance of each student in a notebook, or - today - this is often replaced by an electronic version of the same. The traditional method as well as its electronic counterpart has the drawback of being time consuming. Although the teacher spends only e.g. 1 to 3 minutes per lesson on attendance registration, this will amount to 1 to 3 full weeks of teaching over a full year. Therefore, an interest has been placed in automated systems for attendance evaluation; one of which is described in US patent application No. US 2012/161971. According to this application, each student is equipped with a mobile user device, such as a mobile telephone or a personal digital assistant (PDA) which forwards location information to a server. The location information obtained from e.g. a global positioning satellite (GPS) transponder or by transmitting a signal from the mobile user device to the server, e.g. by transmitting a Bluetooth signal, by beaming a point-to-point infrared signal etc. to the server for attendance evaluation.

An object of the present invention is to provide a reliable system and method of attendance registration that does not require additional hardware to be installed in the teaching institution. The method is to be applied by utilizing the standard hardware that is in use today, and which has a high degree of reliability.

### BRIEF DESCRIPTION OF THE INVENTION

The present invention relates to a method of registering attendance comprising the steps of, for each of a plurality of mobile devices, performing wireless communication between said mobile device and at least one wireless network connection device, also known as a wireless access point, and in relation to said wireless communication providing output data comprising information identifying the at least one wireless network connection device and identification data for the mobile device, obtaining said output data relating to said plurality of mobile devices, and correlating said output data with a database comprising for each of the plurality of mobile devices associated data relating to at least periods of time, scheduled attendance and mobile device identification data so as to obtain confirmation of attendance or non-attendance in accordance with the scheduled attendance for each of the plurality of mobile devices and thus the students associated with the mobile devices.

The wireless network connection device or devices, e.g. the wireless access point or points, may be stationary devices or one or more mobile devices, in a particular embodiment arranged in one or more of said plurality of mobile devices. The identification data of the wireless network connection device will typically be the Basic Service Set Identifier (BSSID).

The identification data of the mobile device may include the Media Access Control (MAC) address, the Mobile Directory Number (MDN), a Subscriber Identity Module (SIM) universal resource identifier (URI), etc.

The scheduled attendance in the database may be data correlating the individual student and the mobile device identification associated with each student to a classroom for each given lesson, to a particular teacher for each given lesson and/or to a group of students, i.e. a class, for each given lesson.

The wireless network connection devices are preferably wireless access points which are typically devices that emit a radio signal that may be employed as a radio beacon, in particularly devices using wireless technologies based on IEEE 802.11 standards used for data exchange, such as WI-FI and Bluetooth. However, it is not a condition that the mobile devices use said wireless access points for data communication to transfer the output data to the registration unit; other means such as a wireless telecommunication network may alternatively be employed.

By the method according to the present invention it is achieved that a reliable attendance registration system may be established by means of hardware units that are present in the teaching institution for other purposes. The method may be enabled purely by means of a computer programme product that is downloaded to each of the mobile devices and a central registration unit established on a computer server.

It is preferred that each of said plurality of mobile devices performs the steps of detecting at least one wireless network connection device by means of said wireless communication and thereby obtaining information identifying the at least one wireless network connection device, and providing said output data comprising information identifying the at least one wireless network connection device and identification data for the mobile device. Hereby, the present method may be implemented by computer programme products installed on the student's mobile devices and possibly also on the teacher's mobile devices but without interfering with the installations at the teaching institution, i.e. with stationary wireless access points or the like.

In alternative embodiments of the present invention, the output data comprising information identifying the at least one wireless network connection device and identification data for the mobile device are provided by one of the mobile devices, preferably the teacher's mobile device, which detects on-going wireless communication between the student's mobile devices and the at least one wireless network connection device by means of so-called sniffer-technology. The user of sniffer-technology requires that all the student's mobile devices employ data communication by means of said at least one wireless network connection device. Another alternative is to collect the data relating to the wireless communication and providing said output data comprising information identifying the at least one wireless network connection device and identification data for the mobile device from the wireless network connection devices, a so-called hotspot-technology.

In a particular preferred embodiment, the method further comprises the step of - for each of the plurality of mobile devices - determining a connection quality measure of a wireless data connection between the mobile device and said at least one wireless network connection device, preferably at least two wireless connection devices, wherein said output data further comprises information relating to said determined connection quality measure for each of the at least one wireless network connection device.

The connection quality measure provides for a more precise registration of whether the particular student is present at the correct location, i.e. whether the mobile device associated with the student is present, and may include known measures of line quality tests, such as a packet loss test, but the most preferred is wherein said connection quality measure comprises the signal strength of at least one wireless network connection device. The determined signal strengths may in a preferred embodiment of the present invention be normalised with the signal strength of the dominating wireless network connection device with the overall highest signal strength for a particular location, i.e. that all determined signal strengths are divided by the determined signal strength of said dominating wireless network connection device. Hereby, signal strengths measured or determined by different types of hardware and associated software may be more readily compared.

Said scheduled attendance data may, in a particular embodiment of the present invention, comprise scheduled physical location data, i.e. data indicating the scheduled location of each student and thereby the mobile device associated with the student, such as specified classrooms, and the database further comprises mapping data by means of which the output data from the mobile devices is used to register the actual physical location of the mobile devices and correlate that with said scheduled physical location data so as to determine attendance or non-attendance of the mobile devices. Thus, mapping data indicates the quality measures, such as the signal strength, of the stationary wireless network connection devices at various location so that the quality measures determined by the mobile devices and included in the output data from the mobile devices can be employed to find out whether the mobile device is located according to the scheduled physical location thereof. Moreover, the mapping data may be applied to locate the physical whereabouts of students, which may be useful in teaching situations where a part of a class are working on a specific project at alternative locations at the teaching institution, such as the library, where the system may be used by the teacher to find students. The mapping data may therefore include not only classrooms but also hallways, the library and other locations of the teaching institution.

The method may further comprise the step of generating said mapping data from said output data obtained from the plurality of mobile devices and an input containing attendance data for each of said mobile devices, the attendance data comprising actual physical location data of each of said mobile devices.

Alternatively or additionally to the provision of mapping data in the database, the method may include that the scheduled attendance data contain information identifying sub-groups of said mobile devices with identical scheduled attendance data. By means of these sub-groups, i.e. classes, it may be possible to statistically analyse the output data obtained from the plurality of mobile devices within an identified sub-group of said mobile devices in order to determine attendance or non-attendance of the mobile devices within said sub-group.

### BRIEF DESCRIPTION OF THE DRAWING

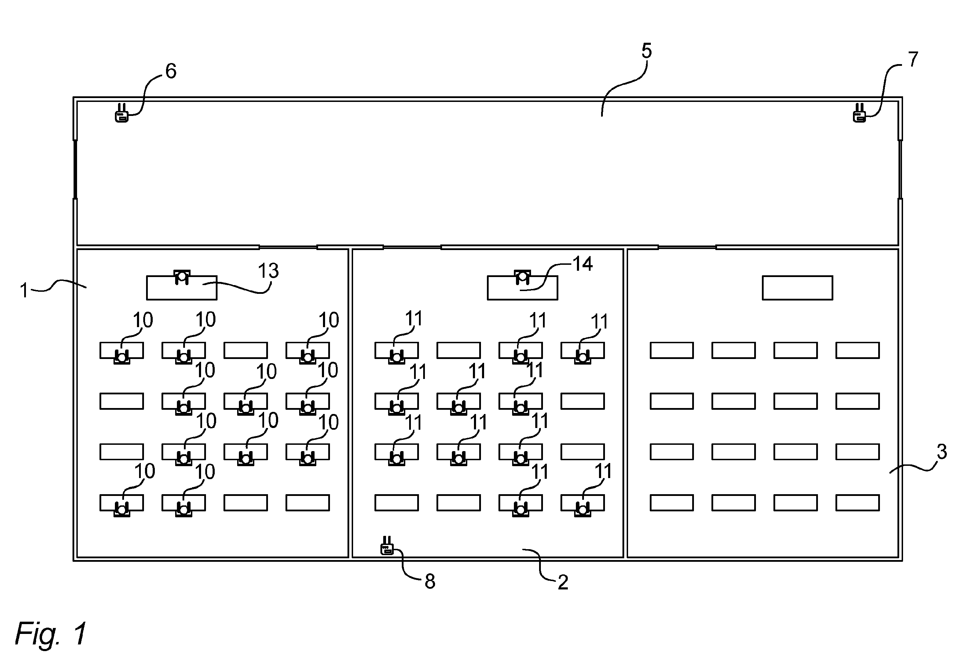

Embodiments of the present invention are illustrated by means of the enclosed drawing, of which
Fig. 1 is a schematic plan view of a part of a teaching institution,

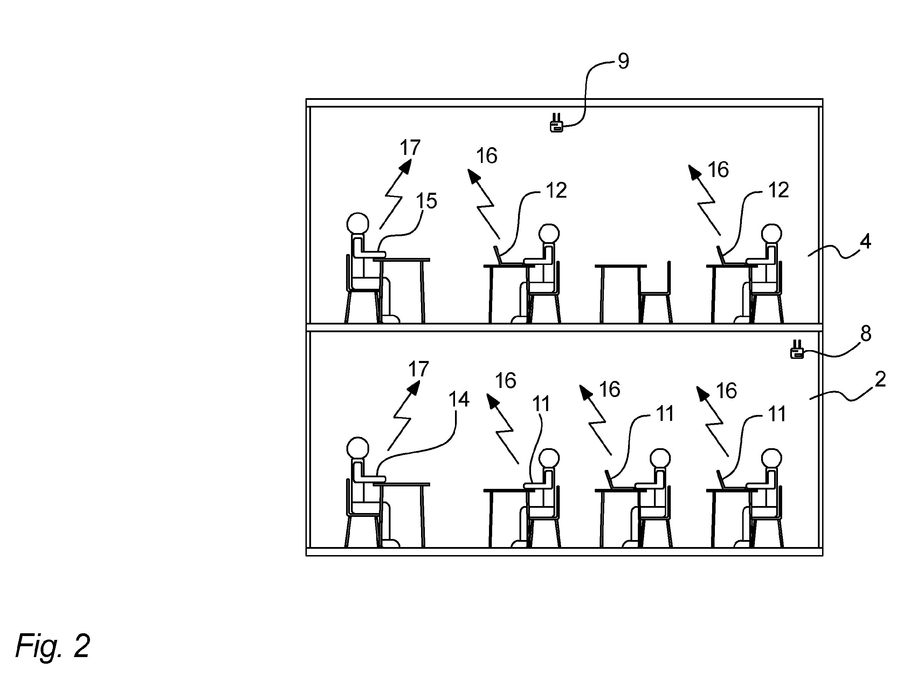

Fig. 2 is a schematic vertical section of the teaching institution
Fig. 3 is the schematic plan view of Fig. 1 illustrating the mapping of a room,
Fig. 4a is a diagram showing the a radio distance diagram of a room, and
Fig. 4b is a flow chart of a multilateral determination of attendance.

### DETAILED DESCRIPTION OF EMBODIMENTS OF THE INVENTION

The present invention is intended to be used in a teaching institution as shown in the drawing having a number of classrooms 1, 2, 3, 4 with hallways 5 giving access to the classrooms. A number of stationary wireless access points 6, 7, 8, 9 are arranged in the institution for providing access to a local area network for data transmission. Classrooms 1, 2, 3, 4 may house groups of students with mobile devices 10, 11, 12 units such as tablets, laptops or mobile phones that are equipped with a receiver able to establish a wireless data connection with wireless access points 6, 7, 8, 9. In most teaching situations, each of the groups of students also has a teacher present who has a similar mobile device 13, 14, 15. Mobile devices 10, 11, 12 of the students, as well as mobile devices 13, 14, 15 of the teachers are also generally provided with a transmitter so that the mobile device can be activated as a mobile wireless access point for providing access to data transmission. The method is intended to be applied to larger groups of students, such as in the range of at least 300 to more than 1000 students.

The overall idea of the present invention is that the student's mobile devices are caused to detect as a minimum the accessibility of one or more stationary wireless access points 6, 7, 8, 9, and/or mobile access points 10, 11, 12, 13, 14 and determine identification data for said wireless access points. The accessibility is preferably detected in more detail by determining a measure of the quality of the wireless connection, in particular by detecting a measure of the signal strength of the wireless network connection device or devices. The output data 16, 17 from the mobile device 10, 11, 12, 13, 14, 15 i.e. the accessibility of one or more wireless access points, the identification data of the wireless access point(s), such as the BSSID and possibly the measure of the data connection quality are then transmitted to a registration unit together with a unique identification data of the mobile device, 10, 11, 12, such as the MAC address, and these output data 16 are then applied to determine whether the student (or the mobile device 10, 11, 12) is present at the correct location at the appropriate time, i.e. to determine the attendance of the student. For this use a database is provided comprising at least scheduled attendance of each student and mobile device identification data of the student's mobile devices. The database may, depending on the chosen setup as exemplified below, comprise more data, such as identification data of the mobile devices 13, 14, 15 of the teachers and data connection quality data for the stationary wireless access points 6, 7, 8, 9 at the various positions in classrooms 1, 2, 3, 4 of the teaching institution.

The mobile devices 10, 11, 12 are equipped with a software product that may control the generation and transmission of the output data 16 without making necessary the active interference of the user, i.e. the student. The output data 16 are transmitted from the mobile devices 10, 11, 12 to the registration unit either pushed from the mobile devices 10, 11, 12, e.g. triggered by a time schedule by which the software product initiates the generation and transmission of output data 16 e.g. 5 minutes after the beginning of each lesson or the output data 16 may be pulled by a request sent from e.g. the registration unit to each of the mobile units 10, 11, 12. The output may 16 be transmitted to the registration unit by means of data connection to wireless access points 6, 7, 8, 9 or alternatively via another data transmission connection, such as a wired LAN or a mobile telecommunication network, such as 3G or 4G.

Should a student for some reason attend a lesson without bringing his or her mobile device 10, 11, 12 with the registered unique identification data, such as the MAC address, the method may be supplemented with a solution that allows a teacher to enter attendance data for a student or to permit an alternative means of attendance registration. One possibility is that the teacher acknowledges the attendance of the student by means of the teacher's mobile device 13, 14, 15 which provides an output 17 containing data to this account to the registration unit. Another possibility is that the teacher by means of the mobile device 13, 14, 15 provides an output 17 to the registration unit allowing the student temporarily, i.e. for that day, to use an alternative mobile device 10, 11, 12, such as another student's mobile device 10, 11, 12.

Suitable encryption of the data communication to ensure that the data are not tampered with may be included but is not described further in the examples provided below. The examples are embodiments of the present invention that may each be employed as individual methods of evaluating attendance of students or as methods that may be combined to obtain improved reliability of an attendance registration system as well as an improved flexibility of the system to account for deficiencies in the data of the system, i.e. errors in the database or sudden changes of the schedule that are not reflected in the contents of the database.

### EXAMPLE 1

In a preferred embodiment of the present invention, signal strengths of all accessible stationary wireless access points 6, 7, 8, 9 of the institution are determined at a plurality of positions at the relevant locations, A, B, C, D, E, F, G, H e.g. along the periphery and the centre I of each of classrooms 1, 2, 3, 4 of the institution in order to map the distribution of signal strengths throughout the whole institution. These map data are stored in the database in order to be subsequently applied to determine the classroom 1, 2, 3, 4 location of mobile devices 10, 11, 12 of each of the students.

At the beginning of each lesson, the student's mobile devices 10, 11, 12 each determine signal strength of all wireless access points that are within reach of that mobile device 10, 11, 12 and provide an output 16 to the registration unit including determined signal strength and identification data of each wireless access point 6, 7, 8, 9 as well as the identification data, such as the MAC address of the mobile unit 10, 11, 12. The registration unit correlates the output data 16 and the time of the output data 16 with the contents of the database to determine whether the student is attending the lesson as scheduled, i.e. appears to be present in the correct classroom.

This method provides for a very precise determination of the position of each of the student's mobile devices 10, 11, 12 and thus the student's attendance to the scheduled lessons. In case a student arrives late at the class, the mobile device 10, 11, 12 may update its position by transmitting output data 16 to the registration unit, e.g. upon start-up of the computer the software will refresh the students room location or by manual activation by the student if the computer is already running, and the student's attendance will be updated from absent to late, possibly with registration of how late the student is.

### EXAMPLE 2

In an alternative to the active mapping of the teaching institution given in Example 1, the mapping of the wireless access point signal strength may be performed e.g. once each year or each semester by manual attendance control performed by the teacher's mobile devices 13, 14, 15. A computer programme product downloaded to and run the mobile device 13, 14, 15 presents the teacher with a list of students as well as room identification. The teacher checks the students that are present and the teacher's mobile devices 13, 14, 15 generate an output 17 that is forwarded to the registration unit. At the beginning of that lesson, student's mobile devices 10, 11, 12 each determines the signal strength of all wireless access points that are within reach of mobile device 10, 11, 12 and provides an output 16 to the registration unit including determined signal strength and identification data of each of wireless access points 6, 7, 8, 9 as well as the identification data, such as the MAC address of mobile units 10, 11, 12. From the combination of output data 17 from teacher's mobile devices 13, 14, 15 and student's mobile devices 10, 11, 12, the registration unit constructs a mapping of the signal strengths of the stationary wireless access points 6, 7, 8, 9 throughout the entire teaching institution.

This method of mapping the signal strengths requires less work and it may, once mapping is established, be updated on the basis of statistical analysis of the data obtained on a daily basis from student's mobile devices 10, 11, 12 to compensate for changes in signal strengths.

### EXAMPLE 3

In a first alternative to constructing a mapping of the signal strengths of stationary wireless access points 6, 7, 8, 9 throughout the teaching institution, teacher's mobile units 13, 14, 15 may be arranged to determine the identification and signal strength of two or more stationary wireless access points 6, 7, 8, 9 and forward these data to registration unit, which analyses the output 16 from each of student's mobile devices 10, 11, 12 comprising similar data to determine whether they are in a position neighbouring the teacher. In this case, no manual input from teachers or from a dedicated mapping of the institution is required.

### EXAMPLE 4

In a very simple embodiment, the transmitter enabling the teacher's mobile device 13, 14, 15 to act as a wireless access point (i.e. mobile hot-spot function) is activated at the beginning of a lesson by a software product downloaded to mobile devices 13, 14, 15. Student's mobile devices 10, 11, 12 detect the presence of this mobile wireless access point 13, 14, 15 together with the identification data of the mobile wireless access point and possibly the signal strength of the connection.

Student's mobile devices 10, 11, 12 each provide an output 16 to the registration unit, which correlates the time of the output 16, the identification data, e.g. the MAC address, of mobile devices 10, 11, 12 and the identification data of the mobile wireless access point and possibly the signal strength of the connection with the contents of the database to determine if the student is attending the lesson. In this example, the database must also comprise data relating the students, or rather the identification data of student's mobile devices 10, 11, 12, to the identification of teacher's mobile devices 13, 14, 15 acting as mobile wireless access points for each of the lessons the students are scheduled to attend. Due to the generally low signal strength of mobile devices acting as wireless access points, the fact that a student's mobile device 10, 11, 12 is within detection range of the teacher's mobile device 13, 14, 15 and is able to produce an output 17 identifying the teacher's mobile device 13, 14, 15 to the registration unit is a strong indication that the student is attending the lesson as scheduled.

The advantage of the method of Example 4 is that no actual mapping of the wireless access points of the institution is required for obtaining a reliable outcome regarding student's attendance and situations where the scheduled classroom is changed will not cause any problems for the method as long as the teacher and the class are together.

### EXAMPLE 5

In a variation of Example 1,the transmitter enabling at least two of student's mobile devices 10, 11, 12 of a class to act as a wireless access point (i.e. mobile hot-spot function) are selected at random and are activated at the beginning of a lesson by a software product downloaded to mobile devices 10, 11, 12. Each mobile device 10, 11, 12 of the students is activated to produce an output 16 comprising the identification of each of the mobile wireless access points that are detected together with the identification of the detecting mobile device 10, 11, 12 itself.

Again, as with the method of Example 4, there is no requirement for actual mapping of the wireless access points of the institution for obtaining a reliable outcome regarding student's attendance. Similarly, situations where the scheduled classroom is changed will not cause any problems for the method as long as most of the student body of the class is together.

### EXAMPLE 6

In yet an alternative method, at the beginning of a lesson each of student's mobile devices 10, 11, 12 determines the signal strength of at least one, preferably at least two of stationary wireless access points 6, 7, 8, 9 and provides an output 16 to the registration unit indicating at least the signal strength(s), the identification of the wireless access point(s) and the MAC address mobile devices 10, 11, 12.

The registration unit then performs a statistical analysis of the output 16 of each of student's mobile devices 10, 11, 12 in a class and employs the result to determine whether the mobile units are at the same location, i.e. the majority of the students in a class is present in the scheduled classroom.

### EXAMPLE 7

Sniffing wireless data packages inside of the classroom 1, 2, 3, 4 via the teacher's mobile device 13, 14, 15 or alternatively another of the plurality of mobile devices 10, 11, 12. By this process the mobile devices 10, 11, 12 which are present in the room 1, 2, 3, 4 can be identified, since all network packages by mobile devices 10, 11, 12 inside the room 1, 2, 3, 4 are grabber filtering by proximity via signal strength. Alternatively, the sniffed data origin can be scanned for identification data of student's mobile device 10, 11, 12 which should be present in the classroom 1, 2, 3, 4, and present mobile devices 10, 11, 12 in the room 1, 2, 3, 4 can be identified.

### EXAMPLE 8

The use of so-called hotspot-technology is made by setting up a server with administrative access to the wireless access points 6, 7, 8, 9 of the teaching institution, the connected student mobile devices 10, 11, 12 signal quality in relation to these access points 6, 7, 8, 9 can be monitored in connection to the mobile device's 10, 11, 12 present at the teaching institution, and these mobile device's 10, 11, 12 whereabouts may be determined without any specific software being present on the student's mobile devices 10, 11, 12.

### HOW AN ALGORITHM FOR DEVICE POSITIONING BY ROOM MAY OPERATE

The method disclosed above as Example 1 is in the following elaborated on. For detecting mobile device 10, 11, 12 position related to room classrooms 1, 2, 3, 4 a so-called "fingerprint" (Wi-Fi Access points BSSIDS with signal in dBm) based system is applied as a first try and a multilateral positioning system as a second try in case the fingerprint system did not provide a result with satisfactory precision. For providing a wireless access point mapping of the classrooms 1, 2, 3, 4 a number of calibration locations A, B, C, D, E, F, G, H, I inside the classroom 1, 2, 3, 4 and outside J, K, L, M, N are measured with a calibration device and the data are provided for the registration unit of the system.

When a mobile device 10, 11, 12 is positioned at an observation point a, b in relation to the classroom 1, 2, 3, 4, the nearest fingerprint distance is determined in an Euclidian manner as the sum of all same BSSID's differences squared between the calibration points A to N and the observation point a, b. The calibration point A to N with the lowest fingerprint distance is named the fingerprint of the observation point a, b. If the fingerprint is inside the classroom 1, 2, 3, 4 it means that the mobile device 10, 11, 12 is inside the classroom 1, 2, 3, 4, in case the fingerprint is outside, it means that the mobile device 10, 11, 12 is outside the classroom 1, 2, 3, 4.

If the fingerprint system does not provide a sufficiently reliable result, a multilateral positioning system may be applied as an alternative as discussed below.

After verifying a position with respect to a classroom 1, 2, 3, 4 of a mobile device 10, 11, 12, e.g. by means of an attendance control by the teacher, this observation point a, b may be added to the database of the registration unit as a calibration point for improving the system accuracy with time. Thus, the system may be calibrated to account for amendments of the given premises, such as replacement of stationary access points 6, 7, 8, 9 or amendment of the physical dimensions or bordering materials of classrooms 1, 2, 3, 4.

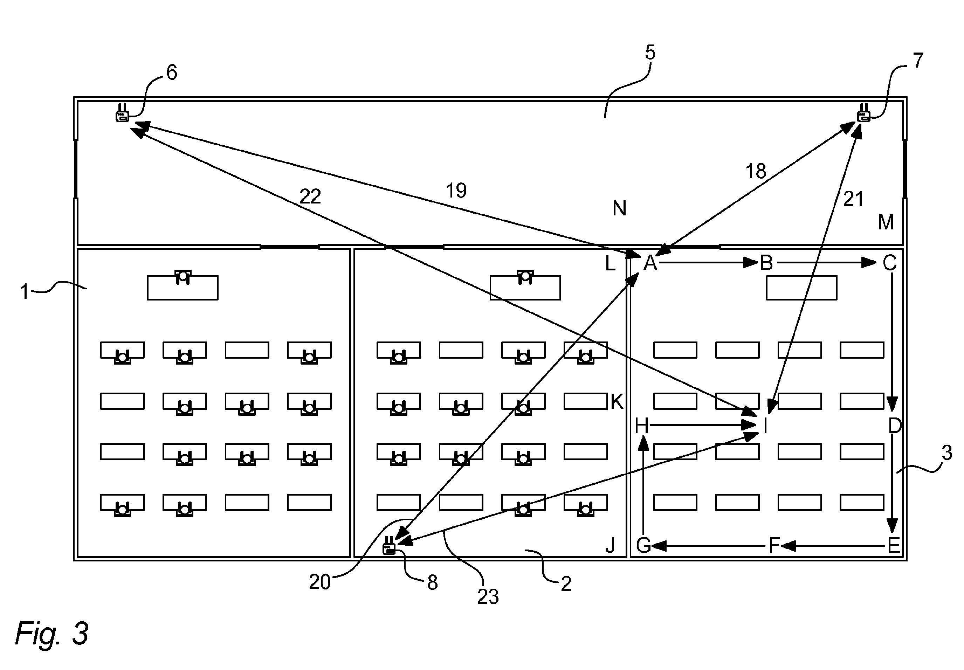

The mapping process is illustrated in Fig. 3 by mapping of a classroom 3. The user carrying the calibration device starts at position A where the calibration device determines the radio distances 18, 19, 20, i.e. the signal strength (BBSID) or an alternative signal quality measure, of each of the accessible stationary wireless access points 6, 7, 8. The user then moves on to a second position B along the periphery of the classroom 3 and repeat determining the radio distances to each of the accessible stationary wireless access points 6, 7, 8, 9. The mapping continues as indicated with the arrows at positions C, D, E, F, G and H along the periphery of the classroom 3 and finally a position I at the center of the classroom 3 is selected, where the calibration device determines the radio distances 21, 22, 23 to each of the accessible stationary wireless access points 6, 7, 8. Also positions J, K, L, M, N outside the classroom are mapped, including periphery positions J, K, L of a neighboring classroom 2 and positions M, N at the hallway 5.

The comer points, i.e. the calibration points A, C, E and G are considered the most important points for evaluating whether a mobile device 10, 11, 12 is inside or outside the classroom 3, whereas the remaining calibration points B, D, F, H and I inside the classroom 3 as well as the calibration points J to N outside of the classroom 3 are supporting calibration points for improved reliability of the method.

The result of the mapping of a single calibration point A to N which is entered into the database may look as follows

| Access point No. | Network Name | Signal quality (dBm) | Normalized signal quality |
|---|---|---|---|
| 6 | WifiPoint10 | 100 | 1 |
| 7 | WiFiPoint1 | 10 | 0.1 |
| 8 | WiFiPoint3 | 30 | 0.3 |

The resulting table also includes the BSSID associated with the network names. The normalized signal quality is the signal strengths normalized with the measured signal quality of the wireless access point 6 having the best overall signal quality for the classroom 3.

After the mapping of the classroom 3, the system may be tested and calibrated by means of a mobile device 10, 11, 12 which is positions at various points inside and outside of the classroom 3 the registration unit evaluates based on the database whether the device 10, 11, 12 is inside or outside the classroom 3 and the results are validated by the user operating the calibration device.

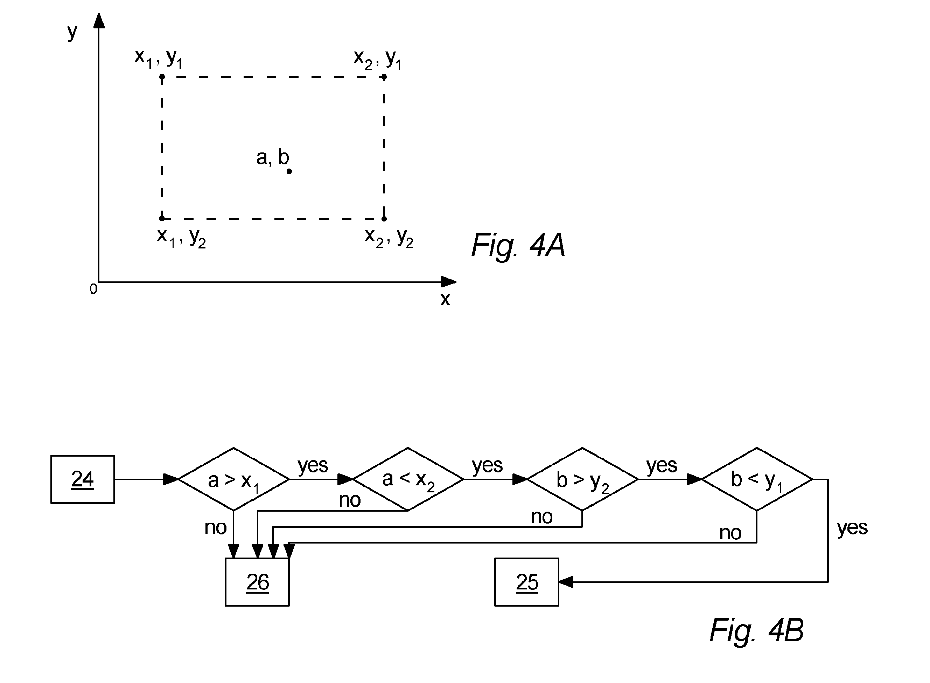

By means of the database containing the outcome of the mapping of the classrooms 1, 2, 3, 4 a "fingerprint" calibration point, i.e. the nearest calibration point to an observation point a, b as discussed above, may be determined and in case the result is sufficiently reliable, it is determined whether the mobile device 10, 11, 12 which provided the output data 16 at the observation point a, b was inside or outside the classroom 3, 4, 5, 6. In case the result of the fingerprint system is considered unreliable, the multilateral positioning system may be applied. A simplified version of the multilateral positioning system is shown in Fig. 4a with four calibration points. x₁, y₁; x₂, y₁; x₁, y₂ and x₂, y₂. These (x, y) coordinates are physical positions determined at least approximately during the mapping of the classroom 1, 2, 3, 4.

By calculating the radio distance from the observation point to each of the four calibration points as the square root of the sum of the differences in signal strength for each accessible stationary access point 6, 7, 8, 9 squared it is possible to determine the coordinates a, b of the observation point with a high degree of certainty, and a simple algorithm may then be applied as shown in fig. 4b to determine whether the observation point a, b is inside 26 or outside 25 the classroom 3, beginning at the starting point 24.

Alternatively, the coordinates of the individual calibration point A to N and observation point are taken to be the signal strengths of each of the accessible wireless access points 6, 7, 8, 9 so that the coordinates are in an n-dimensional space, n being the number of accessible wireless access points 6, 7, 8, 9 in that classroom 1, 2, 3, 4 and the coordinates preferably being normalised with the signal strength of the wireless access point 6, 7, 8, 9 with the overall highest signal strength for the classroom 1, 2, 3, 4. The calibration points A to I inside the classroom 3 defines together the maximum and minimum signal strength values of the classroom 3 for each wireless access point 6, 7, 8, 9 and an observation point is regarded to be within the classroom 3 if the detected signal strength values found in output 16 from the mobile device 10, 11, 12 at the observation point are within these value ranges.

**LIST OF REFERENCE NUMBERS**

| | |
|---|---|
| 1, 2, 3, 4 | Classrooms |
| 5 | Hallway |
| 6, 7, 8, 9 | Stationary wireless access points |
| 10, 11, 12 | Student's mobile devices |
| 13, 14, 15 | Teacher's mobile devices |
| 16 | Output data from student's mobile device to registration unit |
| 17 | Output data from teacher's mobile device to registration unit |
| 18 | Radio distance from calibration point A to wireless access point 7 |
| 19 | Radio distance from calibration point A to wireless access point 6 |
| 20 | Radio distance from calibration point A to wireless access point 8 |
| 21 | Radio distance from calibration point I to wireless access point 7 |
| 22 | Radio distance from calibration point I to wireless access point 6 |
| 23 | Radio distance from calibration point I to wireless access point 8 |
| 24 | Begin multilateral determination of attendance |
| 25 | End: outside room |
| 26 | End: inside room |
| A, B, C, D, E, F, G, H | Calibration points inside periphery of room |
| I | Calibration point central in room |
| J, K, L, M, N | Calibration points outside room |
| x, x₁, x₂ | First coordinate of calibration points |
| y, y₁, y₂ | Second coordinate of calibration points |
| a | First coordinate of observation point |
| b | Second coordinate of observation point |

## Claims

1. Method of registering attendance comprising the steps of, for each of a plurality of mobile devices,
performing wireless communication between said mobile device and at least one wireless network connection device, and in relation to said wireless communication providing output data comprising information identifying the at least one wireless network connection device and identification data for the mobile device,
obtaining said output data relating to said plurality of mobile devices, and
correlating said output data with a database comprising for each of the plurality of mobile devices associated data relating to at least periods of time, scheduled attendance and mobile device identification data so as to obtain confirmation of attendance or non-attendance for each of the plurality of mobile devices.

2. Method according to claim 1,wherein each of said plurality of mobile devices performs the steps of detecting at least one wireless network connection device by means of said wireless communication and thereby obtaining information identifying the at least one wireless network connection device, and providing said output data comprising information identifying the at least one wireless network connection device and identification data for the mobile device.

3. Method according to claim 1 or 2, further comprising the step of, for each of the plurality of mobile devices, determining a connection quality measure of a wireless data connection between the mobile device and said at least one wireless network connection device, wherein said output data further comprises information relating to said determined connection quality measure for each of at least one wireless network connection device.

4. Method according to claim 2, wherein said connection quality measure comprises the signal strength of at least one wireless network connection device.

5. Method according to claim 3 or 4, wherein each of said plurality of mobile devices detects a connection quality measure of at least two wireless network connection devices and provides output data comprising information identifying at least two wireless network connection devices, information identifying the mobile device and information relating to said determined connection quality measure for each of at least two wireless network connection devices.

6. Method according to any of claims 1 to 5, wherein at least one of said wireless network connection devices is a stationary device, preferably wherein at least two of said wireless network connection devices are stationary devices.

7. Method according to any of claims 1 to 6, wherein at least one of said wireless network connection devices is arranged in a mobile device.

8. Method according to claim 7, wherein said mobile device is one of said plurality of mobile devices.

9. Method according to claim 7, wherein at least two of said wireless network connection devices are arranged in mobile devices.

10. Method according to claim 9, wherein said mobile devices are included in said plurality of mobile devices.

11. Method according to any of the preceding claims, wherein said scheduled attendance data comprises scheduled physical location data and the database further comprises mapping data by means of which the output data from the mobile devices is used to evaluate the actual physical location of the mobile devices and correlates that with said scheduled physical location data so as to determine attendance or non-attendance of the mobile devices.

12. Method according to claim 11, further comprising the step of generating said mapping data from said output data obtained from the plurality of mobile devices and an input containing attendance data for each of said mobile devices, the attendance data comprising actual physical location data of each of said mobile devices.

13. Method according to any of claims 1 to 12, wherein said scheduled attendance data contain information identifying sub-groups of said mobile devices with identical scheduled attendance data.

14. Method according to claim 13, wherein said output data obtained from the plurality of mobile devices within an identified sub-group of said mobile devices are statistically analysed in order to determine attendance or non-attendance of the mobile devices within said sub-group.
